# EUROPEAN PATENT SPECIFICATION

(11) **EP 2 821 627 B1**
(45) Date of publication and mention of the grant of the patent: **24.04.2019**
(21) Application number: 13754480.5
(22) Date of filing: 01.03.2013
(51) Int. Cl.: F02K 3/10, F02C 7/00, F23R 3/18

(54) **AFTERBURNER AND AIRCRAFT ENGINE**
NACHBRENNER UND FLUGZEUGTRIEBWERK
DISPOSITIF DE POSTCOMBUSTION ET MOTEUR D'AÉRONEF

(30) Priority: 02.03.2012 JP 2012046319
(43) Date of publication of application: 07.01.2015
(73) Proprietor: IHI Corporation, Tokyo 135-8710 (JP)
(72) Inventor: TANAKA, Shinji, Tokyo 135-8710 (JP); TAKAHASHI, Katsuyoshi, Tokyo 135-8710 (JP); HOSOI, Jun, Tokyo 135-8710 (JP)
(74) Representative: Carpmael, Robert Maurice Charles
(86) International application number: PCT/JP2013/055665
(87) International publication number: WO 2013/129648

(56) References cited:
- FR-A- 1 199 822
- GB-A- 886 700
- JP-A- H0 579 628
- JP-A- H06 193 509
- JP-A- H07 248 116
- JP-A- H09 268 946
- JP-A- H11 218 055
- JP-A- S62 129 528
- JP-A- 2005 207 421
- JP-A- 2012 026 405
- JP-U- H0 561 667
- US-A- 2 929 203
- US-A- 3 800 527
- US-A- 5 685 142

## Description

### [Technical Field]

The present invention relates to: an afterburner configured to increase thrust of an aircraft engine by burning a mixed gas of a combustion gas (a high-temperature gas) discharged from a core passage of the aircraft engine and air (low-temperature air) discharged from a fan passage of the aircraft engine again while supplying fuel to the mixed gas; and the like.

### [Background Art]

Various research and development programs on afterburners have been conducted in recent years to meet demands for aircraft engines with higher thrust. A configuration and the like of a general afterburner are as follows.

An aircraft engine includes: an engine case; an outer duct provided to an outlet portion (rear portion) of the engine case; and a liner, a fuel injector and an igniter provided inside the outer duct. The liner is shaped like a cylinder, and allows a mixed gas to flow through the liner. The fuel injector injects fuel inside the liner. The igniter is provided in the rear (on the downstream side) of the fuel injector inside the outer duct. The igniter ignites the mixed gas, inclusive of the fuel, inside the liner. The aircraft engine further includes a flame stabilizer (flame holder) . The flame stabilizer is provided in the rear of the fuel injector inside the liner, and holds the flame. The flame stabilizer includes multiple gutters which are arranged radially. Each gutter forms a flame stabilization area on its downstream side (immediately downstream side).

While the aircraft engine is in operation, the fuel injector continues injecting the fuel inside the liner, and the igniter continues igniting the mixed gas inclusive of the fuel. For this reason, the flame is formed on the downstream side (in the rear) of the flame stabilizer inside the liner, and the mixed gas is burned again with the fuel. Thereby, more thermal energy can be injected into the combustion gas inside the liner, and the thrust of the aircraft engine can be accordingly increased.

It should be noted that conventional techniques related to the present invention are disclosed in PTL 1 to PTL 3 as well as NPL 1.

### [Citation List]

### [Patent Literature]

[PTL 1] Japanese Patent Application Laid-Open Publication No. H 09-112345
[PTL 2] Japanese Patent Application Laid-Open Publication No. H09-119346
[PTL 3] Japanese Patent Application Laid-Open Publication No. H06-137213

### [Non Patent Literature]

[NPL 1] JING-TANG YANG, CHANG-WU YEN, and GO-LONG TSAI, COMBUSTION AND FLAME, 99,288-294(1994)

### [Summary of Invention]

### [Technical Problem]

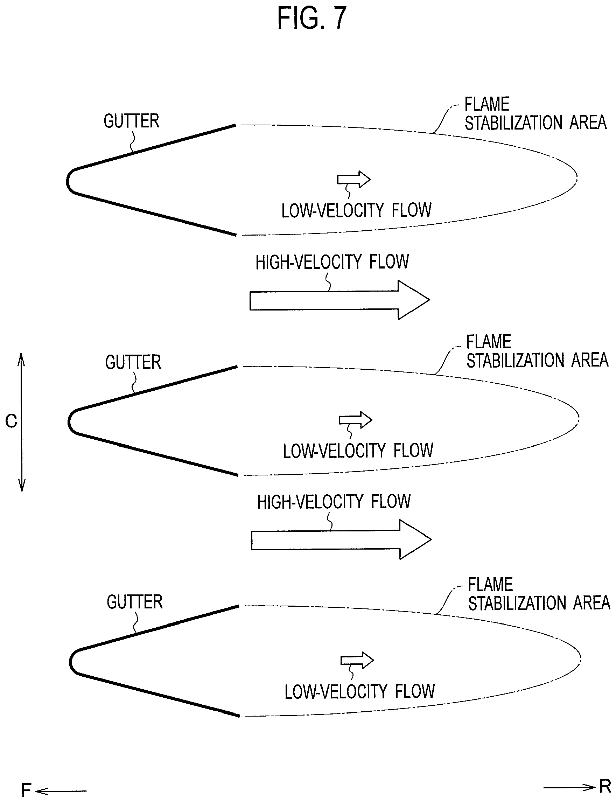

As described above, the flame stabilization area is formed on a downstream side of each gutter. The flow inside the flame stabilization area has a relatively low velocity. In contrast, a flow passing between each neighboring two gutters has a high velocity because the flow area is narrowed. For this reason, as shown in Fig. 7, the high-velocity flow passing between the two neighboring gutters and the low-velocity flow inside the flame stabilization area are mixed together on the immediately downstream side of the flame stabilizer. The mixture of the two flows causes a large pressure loss. The pressure loss lowers a rate of increase in thrust of the aircraft engine, and makes it difficult to enhance the engine performance of the aircraft engine to a high level. Incidentally, in Fig. 7, reference sign "F" indicates a frontward direction (upstream direction), reference sign "R" indicates a rearward direction (downstream direction), and reference sign "C" indicates a circumferential direction.

An object of the present invention is to provide an afterburner and the like which can solve the foregoing problem.

A form of afterburning bypass aviation turbojet engine is disclosed in US 2,929,203. It discloses an afterburning bypass aviation turbojet engine having a core member and a tubular inner wall structure jointly defining an annular primary exhaust fluid passageway, and tubular outer wall structure encompassing said inner wall structure and together therewith defining an annular secondary fluid passageway. It therefore provides an afterburner configured to increase thrust of an aircraft engine by burning a mixed gas of a combustion gas discharged from a core passage of the aircraft engine and air discharged from a fan passage of the aircraft engine again while supplying fuel to the mixed gas, the afterburner comprising:
an outer duct provided to an outlet portion of an engine case of the aircraft engine;
a cylindrical liner provided inside the outer duct, and configured to allow the mixed gas to flow through the liner;
a fuel injector (33) configured to inject the fuel into the liner (29); and
an igniter (35) configured to ignite the mixed gas including the fuel inside the liner (29), and it further comprises a flame stabilizer and a plurality of gutters having all features defined in the preamble of claim 1 of the present invention.

The present invention provides an afterburner configured to increase thrust of an aircraft engine by burning a mixed gas of a combustion gas discharged from a core passage of the aircraft engine and air discharged from a fan passage of the aircraft engine again while supplying fuel to the mixed gas. The afterburner includes: an outer duct provided to an outlet portion (rear portion) of an engine case of the aircraft engine; a cylindrical liner provided inside the outer duct, configured to allow the mixed gas to flow through the liner; a fuel injector configured to inject the fuel into the liner; an igniter configured to ignite the mixed gas including the fuel inside the liner; and a flame stabilizer (flame holder) disposed in the rear (on the downstream side) of the fuel injector inside the liner, including a plurality of gutters arranged radially and each configured to form a flame stabilization area on a downstream side (immediately downstream side) of the gutter, and configured to hold a flame. Here, each gutter is formed from a curved apex section and flat plate-shaped side surface sections integrally formed on two sides of the apex section, and the gutter has a V-shaped cross-sectional shape which is opened to a downstream side of the gutter. Moreover, at least one through-hole is formed only in each side surface section of the gutter. A tip end-side portion of the igniter is placed in the flame stabilization area.

It should be noted that in the scope of claims and the specification of the application concerned, the term "provided" means that a state of being provided indirectly through another member as well as a state of being provided directly. Similarly, the term "arranged" means a state of being arranged through another member as well as a state of being arranged directly. Furthermore, the term "downstream side" means a downstream side in view of a flowing direction of a main stream.

A second aspect of the present invention provides an aircraft engine configured to produce thrust by exhausting a mixed gas of a combustion gas and air in a rearward direction, which includes the afterburner of the first aspect.

### [Advantageous Effects of Invention]

The present invention can sufficiently reduce the pressure loss on the downstream side of the flame stabilizer. Thereby, the present invention can increase the rate of increase in thrust of the aircraft engine, and can enhance the engine performance of the aircraft engine to a high level.

### [Brief Description of Drawings]

Fig. 1 is a cross-sectional view of a gutter of an embodiment of the present invention taken along the I-I line of Fig. 2.
Fig. 2 is a magnified view of a part indicated with an arrow II in Fig. 5.
Fig. 3 is a magnified perspective view of a part indicated with an arrow III in Fig. 5.
Figs. 4(a), 4(b) and 4(c) are partial side views of gutter portions in an afterburner of the embodiment of the present invention, respectively.
Fig. 5 is a schematic sectional side view of an aircraft engine of the embodiment of the present invention.
Fig. 6 is a diagram showing a relationship between a predetermined mass flow rate while the aircraft engine is in operation and a pressure coefficient on the downstream side of a flame stabilizer.
[Fig. 7] Fig. 7 is a plan development of a vicinity of multiple gutters in a general afterburner.

### [Description of Embodiments]

The present invention has been made with a result of an analysis using the below-described three-dimensional steady viscosity CFD (Computational Fluid Dynamics) taken into consideration.

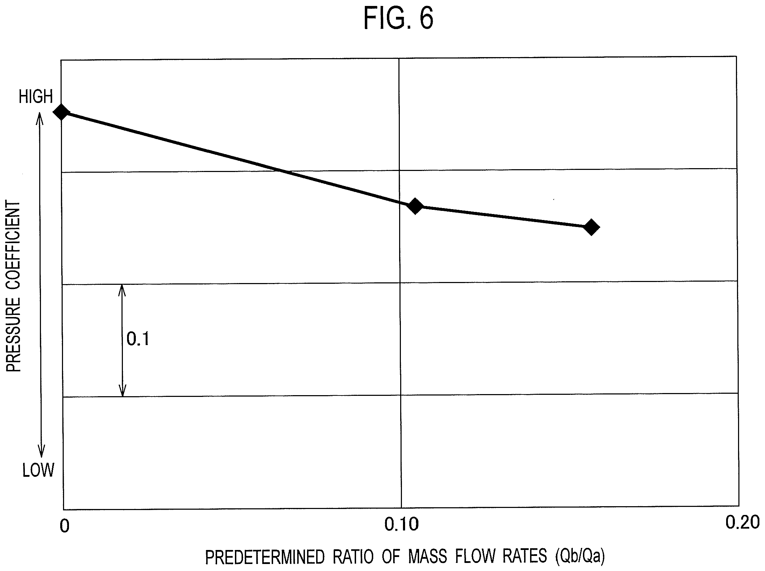

This analysis used an assumed gutter having a V-shaped cross-sectional shape which was opened to a downstream side of the gutter and including multiple through-holes formed only in its two side surface sections. The analysis found a relationship between a ratio Qb/Qa of mass flow rates of mixed gases (a predetermined ratio of mass flow rates in an aircraft engine in operation) and a pressure coefficient on the downstream side of the flame stabilizer. In this respect, Qa denotes a mass flow rate of a mixed gas flowing toward the gutter in the aircraft engine in operation, and Qb denotes a mass flow rate of a mixed gas introduced into the gutter through the multiple through-holes in the gutter. Fig. 6 shows the result of the analysis. As shown in the graph, it was learned that as the ratio Qb/Qa of the mass flow rates became larger (became equal to 0.10 or more, preferably), the pressure loss on the downstream side of the flame stabilizer could be reduced sufficiently. In this graph, one scale mark on the vertical axis represents 0.1. Fig. 6 shows that a smaller value of the pressure coefficient on the vertical axis means a smaller pressure loss on the downstream side of the flame stabilizer. In short, it was learned from this analysis that when the gutter had the above-mentioned shape, the pressure loss on the downstream side of the flame stabilizer could be reduced sufficiently.

A preceding study (see NPL 1), meanwhile, has already showed clearly that when multiple through-holes are formed not only in the two side surface sections of the gutter but also in an apex section of the gutter, a high-velocity mixed gas flows into the gutter and the flame stabilization performance (combustion stabilization performance) of the flame stabilizer accordingly deteriorates to a large extent.

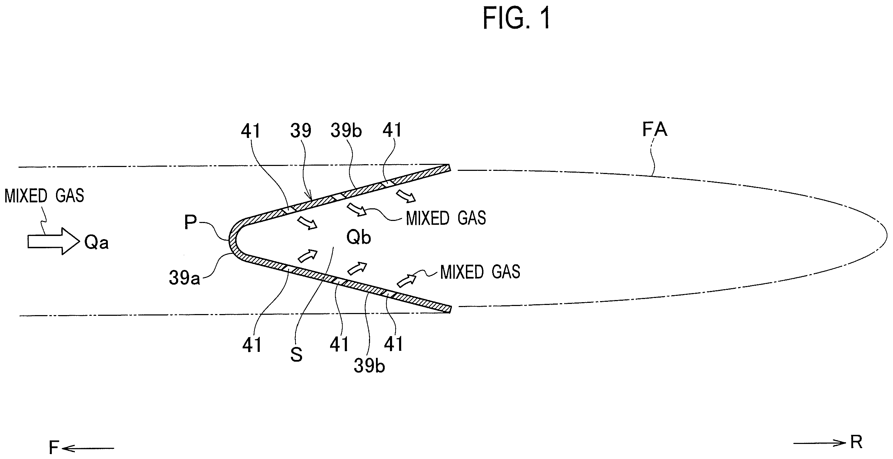

Next, referring to Figs. 1 to 5, descriptions will be provided for an embodiment of the present invention. It should be noted that reference sign "F" indicates a forward direction (upstream direction) and reference sign "R" indicates a rearward direction

### (downstream direction.)

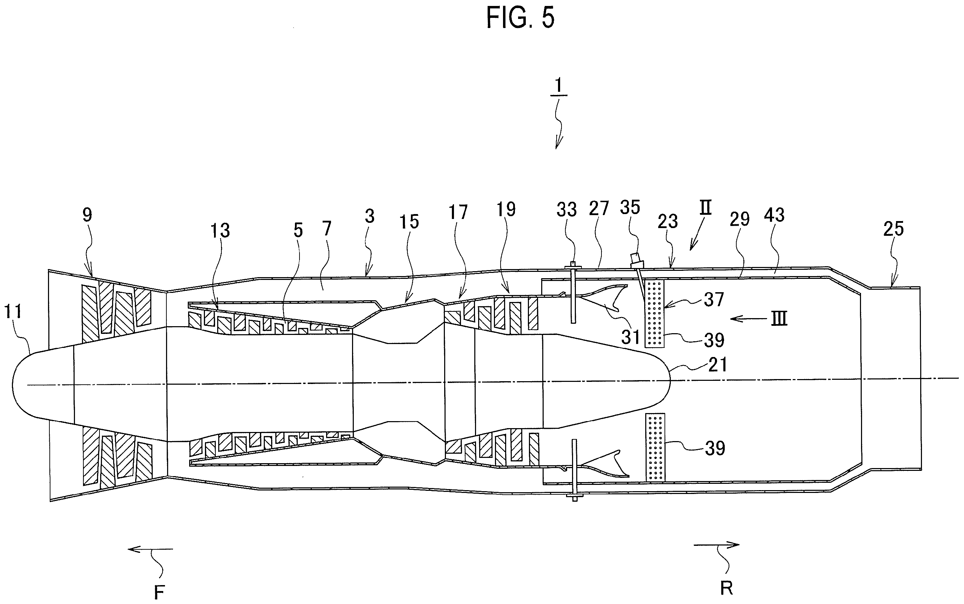

As shown in Fig. 5, an aircraft engine (hereinafter simply referred to as an engine) 1 of the embodiment is an apparatus configured to produce thrust (engine thrust) by discharging a mixed gas of a combustion gas (a high-temperature gas) and air (low-temperature air) in the rearward direction. The engine 1 includes: a cylindrical engine case 3; and a core passage (a main passage) 5 and a fan passage (a bypass passage) 7 formed in the inside of the engine case 3 by partitioning the inside thereof. The core passage 5 is formed in an annular shape (in a hollowed cylindrical shape), and allows the combustion gas to flow through the core passage 5 in the rearward direction. The fan passage 7 is placed outside the core passage 5, and is formed in an annular shape (a hollowed cylindrical shape) . The fan passage 7 allows the air (the low-temperature air) to flow through the fan passage 7 in the rearward direction.

The engine 1 includes: a fan 9 disposed in a front portion of the inside of the engine case 3; and an inlet cone 11 disposed in a center portion on the front side of the fan 9. The fan 9 takes air into the core passage 5 and the fan passage 7. The inlet cone 11 guides the air in the rearward direction. The engine 1 further includes: a compressor 13 disposed in the rear of the fan 9; and a combustor 15 disposed in the rear of the compressor 13. The compressor 13 compresses the air which has been taken into the core passage 5. The combustor 15 generates the combustion gas by combusting the air including fuel.

The engine 1 includes: a high-pressure turbine 17 disposed in the rear of the combustor 15; and a low-pressure turbine 19 disposed in the rear of the high-pressure turbine 17. The high-pressure turbine 17 is driven by expansion of the combustion gas from the combustor 15. In conjunction with this, the high-pressure turbine 17 drives the compressor 13. The low-pressure turbine 19 is driven by expansion of the combustion gas. In conjunction with this, the low-pressure turbine 19 drives the fan 9. Furthermore, a tail cone 21 is disposed in the rear of the low-pressure turbine 19. The tail cone 21 guides the combustion gas in the rearward direction.

The engine 1 includes an afterburner 23 disposed in the rear of the engine case 3. The afterburner 23 increases the thrust (the engine thrust) of the engine 1 by: burning again the mixed gas of the combustion gas discharged from the core passage 5 and the air (the low-temperature air) discharged from the fan passage 7 while supplying fuel to the mixed gas. An exhaust nozzle 25 configured to exhaust the mixed gas which has been burned again by the afterburner 23 is disposed in the rear of the afterburner 23.

Next, descriptions will be provided for a concrete configuration of the afterburner 23 of the embodiment.

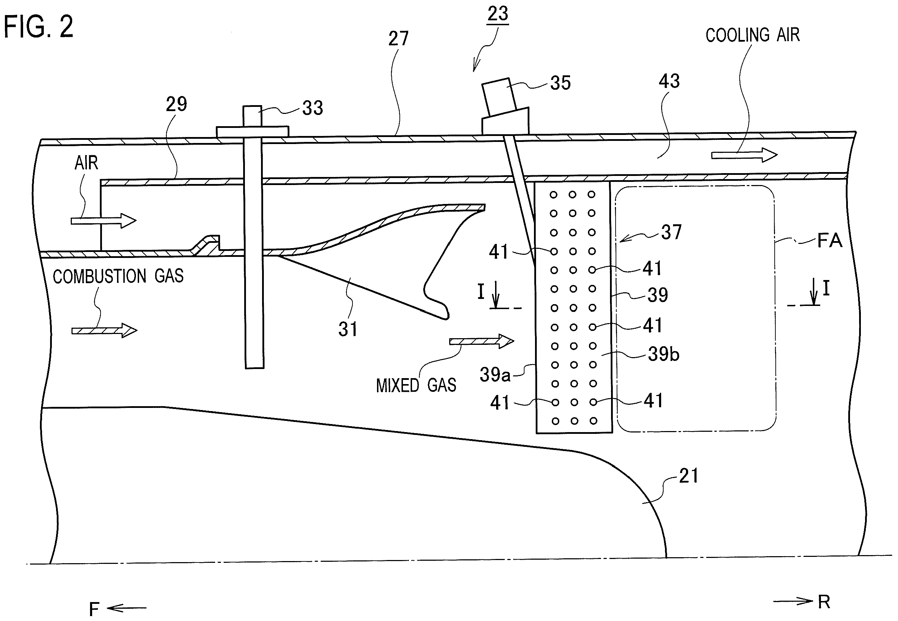

As shown in Figs. 2 and 5, the afterburner 23 includes: an outer duct 27 disposed in the rear (in the outlet portion) of the engine case 3; and a cylindrical liner 29 disposed inside the outer duct 27. The outer duct 27 is connected to the exhaust nozzle 25. Furthermore, the liner 29 allows the mixed gas to flow through the liner 29 in the rearward direction. In addition, a mixer 31 is disposed in the rear of the engine case 3. The mixer 31 is placed inside the liner 29, and mixes the combustion gas discharged from the core passage 5 and the air discharged from the fan passage 7. Incidentally, the mixer 31 may have the same configuration as does a publicly-known mixer shown in PTL 3 as described above.

The afterburner 23 includes multiple spray bars 33 which are examples of a fuel injector, and the spray bars 33 are provided to the outer duct 27. The spray bars 33 are disposed at intervals in the circumferential direction of the outer duct 27. The tip end-side portion of each spray bar 33 is placed inside the liner 29. Each spray bar 33 injects the fuel into the liner 29. The afterburner 23 further includes an ignition device (an igniter) 35 provided to the outer duct 27 in the rear of the spray bars 33. The igniter 35 ignites (lights off) the mixed gas including the fuel inside the liner 29.

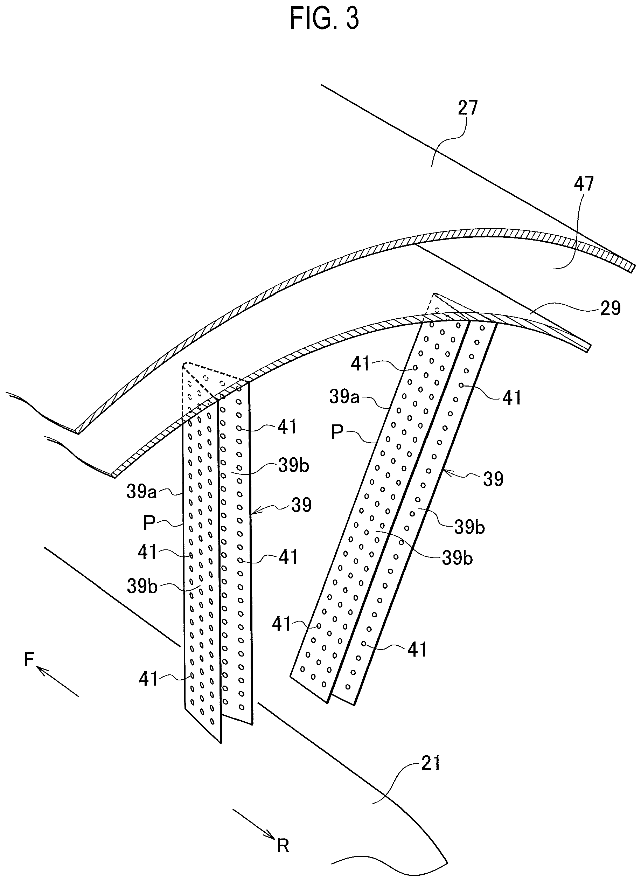

As shown in Figs. 2 and 3, the afterburner 23 includes a flame stabilizer (a flame holder) 37. The flame stabilizer 37 is disposed in the rear (on the downstream side) of the spray bars 33 inside the liner 29, and holds the flame. In addition, the flame stabilizer 37 includes multiple gutters 39 arranged radially. Each gutter 39 generates a flame stabilization area FA on the downstream side (immediately on the downstream side) of the gutter 39. Incidentally, the tip end-side portion (whose illustration is omitted) of the igniter 35 is placed in the flame stabilization area FA.

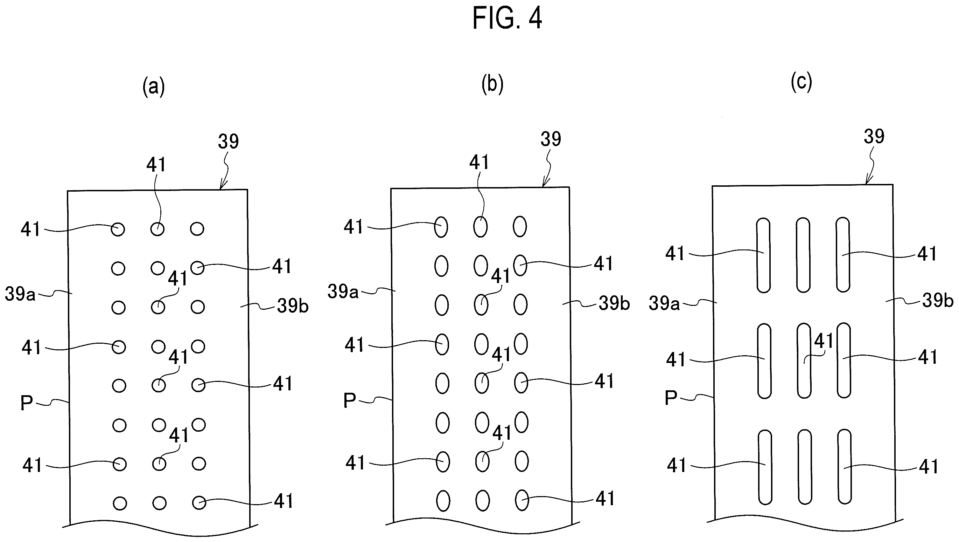

As shown in Figs. 1 and 4(a), each gutter 39 is formed from: a curved apex section 39a including a stagnation point P; and flat plate-shaped side surface sections 39b integrally formed on the two sides of the apex section 39a. Each gutter 39 has a V-shaped cross-sectional shape which is opened to the downstream side. Furthermore, multiple circular through-holes 41 are formed only in the two side surface sections 39b of each gutter 39. It should be noted that the shape of each through-hole 41 is not limited to the circular one. In other words, as shown in Figs. 4(b) and 4(c), each through-hole 41 may be shaped like an ellipse, or like a slit (slot). Otherwise, instead of the multiple through-holes 41, a single slit (slot)-shaped through-hole (whose illustration is omitted) may be formed.

As shown in Fig. 1, a deceleration space (a deceleration section, a mixing space) S for mixing and concurrently decelerating mixed gases introduced through the multiple through holes 41 is formed in each gutter 39. In addition, the multiple through-holes 41 are formed in each gutter 39 in a way that the ratio Qb/Qa of the mass flow rates of the mixed gases is equal to 0.10 or more. As discussed in the beginning, Qa denotes the mass flow rate of the mixed gas flowing toward each gutter 39 while the engine 1 is in operation, and Qb denotes the mass flow rate of the mixed gas introduced into the inside (the deceleration space S) of each gutter 39 through the multiple through-holes 41 in the gutter 39. To put it concretely, in each gutter 39, the total opening area and arrangement pattern of the multiple through-holes 41, the orientation of the multiple through-holes 41 with respect to the thickness direction of the side surface sections 39b, and the like are set in a way that the ratio (Qb/Qa) of the mass flow rates is equal to 0.10 or more. It should be noted that when the ratio (Qb/Qa) of the mass flow rates exceeds 0.30, it is difficult to sufficiently secure the flame stabilization performance (the combustion stabilization performance) of the flame stabilizer 37.

As shown in Fig. 2, an annular liner cooling passage 43 is formed between the inner surface of the outer duct 27 and the outer surface of the liner 29. The liner cooling passage 43 allows part of the air discharged from the fan passage 7 to flow through the liner cooling passage 43 as cooling air.

Next, descriptions will be provided for the working and effects of the embodiment.

Once the fan 9 and the compressor 13 are driven by an operation of an appropriate starter apparatus (whose illustration is omitted), the air can be taken by the fan 9 into the core passage 5 and the fan passage 7, and the air taken into the core passage 5 can be compressed by the compressor 13. Subsequently, once the high-pressure combustion gas is generated by causing the combustor 15 to combust the air including the fuel, the high-pressure turbine 17 and the low-pressure turbine 19 are driven by the expansion of the combustion gas. Thereby, the compressor 13 and the fan 9 can be driven in conjunction with the high-pressure turbine 17 and the low-pressure turbine 19, respectively. Thereafter, the engine 1 can be put into operation through a series of operations (the driving of the fan 9, the driving of the compressor 13, the combustion by the combustor 15, as well as the driving of the high-pressure turbine 17 and the low-pressure turbine 19). Subsequently, while the engine 1 is in operation, the combustion gas discharged from the core passage 5 and the air discharged from the fan passage 7 are mixed together by the mixer 31, and, as the mixed gas, are exhausted through the exhaust nozzle 25 in the rearward direction. Thereby, the thrust (the engine thrust) of the engine 1 can be produced.

While the engine 1 is in operation, the fuel is injected from the multiple spray bars 33 into the liner 29, and the mixed gas including the fuel is ignited by the igniter 35. Thereby, the flame is produced in the rear (on the downstream side) of the flame stabilizer 37 inside the liner 29, and the mixed gas is burned again with the fuel. By this, thermal energy can be injected into the combustion gas inside the liner 29, and the thrust of the engine 1 can be increased. On the other hand, while the engine 1 is in operation, part of the air discharged from the fan passage 7 flows through the liner cooling passage 43 as the cooling air. Thereby, the liner 29 can be cooled (in the normal operation of the afterburner 23).

In this respect, each gutter 39 has the V-shaped cross-sectional shape which is opened to the downstream side of the gutter 39, and the multiple through-holes 41 are formed only in the two side surface sections 39b of each gutter 39. Furthermore, in each gutter 39, the total opening area of the multiple through-holes 41 and the like are set in a way that the ratio Qb/Qa of the mass flow rates is in the range of 0.10 to 0.30 inclusive. For these reasons, as learned from the above-discussed result of the analysis, the afterburner 23 of the embodiment is capable of sufficiently reducing the pressure loss on the downstream side of the flame stabilizer 37 while sufficiently securing the flame stabilization performance of the flame stabilizer 37.

Accordingly, the present invention makes it possible to improve the engine performance of the engine 1 to a high level by: sufficiently securing the flame stability performance of the flame stabilizer 37; and additionally improving a rate of increase in thrust of the engine 1.

It should be noted that the present invention is not limited to the foregoing descriptions which have been provided for the embodiment, and can be carried out in various modes. Moreover, the scope of rights covered by the present invention is not limited to the embodiment.

### [Industrial Applicability]

The present invention can sufficiently reduce the pressure loss on the downstream side of the flame stabilizer. Accordingly, the present invention can provide the aircraft engine whose engine performance is improved to a high level by improving the rate of the increase in thrust.

## Claims

1. An afterburner (23) configured to increase thrust of an aircraft engine (1) by burning a mixed gas of a combustion gas discharged from a core passage (5) of the aircraft engine (1) and air discharged from a fan passage (7) of the aircraft engine (1) again while supplying fuel to the mixed gas, the afterburner (23) comprising:
an outer duct (27) provided to an outlet portion of an engine case (3) of the aircraft engine (1);
a cylindrical liner (29) provided inside the outer duct (27), and configured to allow the mixed gas to flow through the liner (29);
a fuel injector (33) configured to inject the fuel into the liner (29);
an igniter (35) configured to ignite the mixed gas including the fuel inside the liner (29); and
flame stabilizer (37) disposed in a rear of the fuel injector (33) inside the liner (29), including a plurality of gutters (39) arranged radially and each configured to form a flame stabilization area (FA) on a downstream side of the gutter (39), and configured to hold a flame, wherein
each gutter (39) is formed from a curved apex section (39a) and flat plate-shaped side surface sections integrally formed on two sides of the apex section (39a), and has a V-shaped cross-sectional shape which is opened to a downstream side of the gutter (39), **characterized in that**
at least one through-hole (41) is formed only in each side surface section of the gutter (39), and
a tip end-side portion of the igniter (35) is placed in the flame stabilization area (FA).

2. The afterburner according to claim 1, wherein a deceleration space (S) for mixing and concurrently decelerating the mixed gas introduced through the at least one through-hole (41) is defined inside the gutter (39).

3. The afterburner according to claim 1, wherein
a total opening area of a multiple of through-holes (41) in each gutter (39) is set in a way that a ratio Qb/Qa is in a range of 0.10 to 0.03,
wherein Qa denotes a mass flow rate of a mixed gas flowing toward the gutter (39) in the aircraft engine (1) in operation, and Qb denotes a mass flow rate of a mixed gas introduced into the gutter (39) through the multiple of through-holes (41) in the gutter (39).

4. An aircraft engine (1) configured to produce thrust by exhausting a mixed gas of a combustion gas and air in a rearward direction, comprising the afterburner (23) according to any one of claims 1 to 3.

## Patentansprüche

1. Nachbrenner (23), welcher konfiguriert ist, um Schub eines Luftfahrzeugmotors (1) durch nochmaliges Verbrennen eines gemischten Gases aus einem Verbrennungsgas, welches aus einem Kerndurchgang (5) des Luftfahrzeugmotors (1) abgegeben wird, und Luft, welche aus einem Gebläsedurchgang (7) des Luftfahrzeugmotors (1) abgegeben wird, wobei Kraftstoff zu dem gemischten Gas zugegeben wird, wobei der Nachbrenner (23) Folgendes beinhaltet:
einen äußeren Kanal (27), welcher an einem Auslassabschnitt eines Motorgehäuses (3) des Luftfahrzeugmotors (1) bereitgestellt ist;
eine zylindrische Auskleidung (29), welche innerhalb des äußeren Kanals (27) bereitgestellt ist und konfiguriert ist, um das gemischte Gas in die Lage zu versetzen, durch die Auskleidung (29) zu strömen;
einen Kraftstoffeinspritzer (33) welcher konfiguriert ist, um den Kraftstoff in die Auskleidung (29) einzuspritzen;
einen Zünder (35), welcher konfiguriert ist, um das gemischte Gas, welches den Kraftstoff enthält, innerhalb der Auskleidung (29) zu zünden; und
einen Flammenstabilisator (37), welcher in einem rückwärtigen Bereich des Kraftstoffeinspritzers (33) innerhalb der Auskleidung (29) angeordnet ist, welcher eine Vielzahl von Rinnen (39) enthält, welche radial angeordnet und jeweils konfiguriert sind, um einen Flammenstabilisierungsbereich (FA) an einer nachgelagerten Seite der Rinne (39) zu bilden, und konfiguriert sind, um eine Flamme zu halten, wobei
jede Rinne (39) aus einem gekrümmten Spitzenabschnitt (39a) und flachen, plattenförmigen Seitenflächenabschnitten gebildet ist, welche einstückig an zwei Seiten des Spitzenabschnitts (39a) gebildet sind, und eine V-förmige Querschnittsflächenform besitzt, welche sich auf eine nachgelagerte Seite der Rinne (39) öffnet, **dadurch gekennzeichnet, dass**
mindestens ein Durchgangsloch (41) nur in jedem Seitenflächenabschnitt der Rinne (39) gebildet ist, und
ein kopfendseitiger Abschnitt des Zünders (35) in dem Flammenstabilisierungsbereich (FA) platziert ist.

2. Nachbrenner nach Anspruch 1, bei welchem ein Entschleunigungsraum (S) zum Mischen und gleichzeitigen Entschleunigen des gemischten Gases, welches durch das mindestens eine Durchgangsloch (41) eingeleitet wird, innerhalb der Rinne (39) definiert ist.

3. Nachbrenner nach Anspruch 1, bei welchem
ein gesamter Öffnungsbereich einer Vielzahl von Durchgangslöchern (41) in einer jeden Rinne (39) in einer Art festgelegt ist, dass das Verhältnis Qb/Qa in einem Bereich von 0,10 bis 0,03 liegt,
wobei Qa eine Massendurchflussrate eines gemischten Gases, welches in Richtung der Rinne (39) in dem Luftfahrzeugmotor (1) in Betrieb strömt, bezeichnet, und Qb eine Massendurchflussrate eines gemischten Gases, welches in die Rinne (39) durch eine Vielzahl von Durchgangslöchern (41) in der Rinne (39) eingeleitet wird, bezeichnet.

4. Luftfahrzeugmotor (1), welcher konfiguriert ist, um Schub durch Ausstoß eines gemischten Gases aus einem Verbrennungsgas und Luft in eine rückwärtige Richtung zu erzeugen, welcher den Nachbrenner (23) nach einem der Ansprüche 1 bis 3 beinhaltet.

## Revendications

1. Dispositif de post-combustion (23) configuré afin d'augmenter la poussée d'un moteur d'avion (1) en brûlant un gaz mixte constitué d'un gaz de combustion déchargé d'un passage central (5) du moteur d'avion (1) et d'air déchargé d'un passage de ventilateur (7) du moteur d'avion (1) à nouveau tout en fournissant du combustible au gaz mixte, le dispositif de post-combustion (23) comprenant :
un conduit extérieur (27) ménagé sur une partie de sortie d'un carter moteur (3) du moteur d'avion (1) ;
un chemisage cylindrique (29) ménagé à l'intérieur du conduit extérieur (27), et configuré afin de permettre au gaz mixte de s'écouler à travers le chemisage (29) ;
un injecteur de combustible (33) configuré afin d'injecter le combustible dans le chemisage (29) ;
un système d'allumage (35) configuré afin d'allumer le gaz mélangé incluant le combustible à l'intérieur du chemisage (29) ; et
un stabilisateur de flamme (37) disposé à l'arrière de l'injecteur de combustible (33) à l'intérieur du chemisage (29), incluant une pluralité de gouttières (39) agencées de manière radiale et chacune configurée afin de former une zone de stabilisation de flamme (FA) sur un côté en aval de la gouttière (39), et configurée afin de maintenir une flamme, dans lequel
chaque gouttière (39) est formée à partir d'une section de sommet incurvée (39a) et des sections de surface latérales en forme de plaque planes formées d'un seul tenant sur deux côtés de la section de sommet (39a), et présente une forme en coupe transversale en forme de V qui est ouverte vers un côté aval de la gouttière (39), **caractérisé en ce que**
au moins un orifice passant (41) est formé uniquement dans chaque section de surface latérale de la gouttière (39), et
une partie latérale à extrémité pointue du système d'allumage (35) est placée dans la zone de stabilisation de flamme (FA).

2. Dispositif de post-combustion selon la revendication 1, dans lequel un espace de décélération (S) permettant de mélanger et de décélérer simultanément le gaz mixte introduit à travers ledit au moins un orifice passant (41) est défini à l'intérieur de la gouttière (39).

3. Dispositif de post-combustion selon la revendication 1, dans lequel
une zone d'ouverture totale de multiples orifices passants (41) dans chaque gouttière (39) est réglée de sorte qu'un rapport Qb/Qa soit dans une plage comprise entre 0,10 et 0,03,
dans lequel Qa représente un débit massique d'un gaz mixte s'écoulant vers la gouttière (39) dans le moteur d'avion (1) en fonctionnement, et Qb représente un débit massique d'un gaz mixte introduit dans la gouttière (39) à travers les multiples orifices passants (41) dans la gouttière (39).

4. Moteur d'avion (1) configuré afin de produire une poussée en expulsant un gaz mixte constitué d'un gaz de combustion et d'air dans une direction vers l'arrière, comprenant le dispositif post-combustion (23) selon l'une quelconque des revendications 1 à 3.
